# EUROPEAN PATENT APPLICATION

(11) **EP 3 154 109 A1**
(43) Date of publication of application: **12.04.2017**
(21) Application number: 15802465.3
(22) Date of filing: 02.06.2015
(51) Int. Cl.: H01M 2/24, H01M 10/12

(54) **BATTERY ELEMENT COMPRISING A PLURALITY OF BATTERY CELLS DISPOSED IN A LINE**

(30) Priority: 03.06.2014 ES 201430844
(71) Applicant: Dachs Electrónica, S.A., 08340 Vilassar De Mar (ES); López Ortiz, Antonio, 08340 Vilassar De Mar (ES)
(72) Inventor: LÓPEZ ORTIZ, Antonio, 08340 Vilassar De Mar (ES)
(74) Representative: Oficina Ponti, SLP
(86) International application number: PCT/ES2015/070431
(87) International publication number: WO 2015/185776

(57) **Abstract**

The invention relates to a battery element 1) comprising a plurality of battery cells (2), arranged in a line, comprising power-conducting tracks (3) that connect the cells (2) in series and/or in parallel, measuring means for measuring the individual voltages of the cells (2), said measuring means comprising processors (P) and voltage sensing tap tracks (4) between the terminals of each cell (2). The battery element also comprises a printed circuit board or a set of printed circuit boards (5, 6, 7) which are joined to one another and at least one of which is provided with openings (8) for the passage and connection of the terminals of the cells (2). The power-conducting tracks (3), the voltage sensing tap tracks (4) and the processors (P) are integrated into the printed circuit boards, said printed circuit board(s) (5, 6, 7) comprising, on one edge thereof, a general output connection terminal (9) of the element, which supplies the aggregate voltage of the cells (2) of the element (1) and the voltage state signals of each of the cells (2). The invention also relates to a battery provided with a plurality of said elements.

## Description

The present invention relates to a battery element comprising a plurality of battery cells arranged in a line, which facilitates a safe, reliable, quick assembly and, moreover, allows for assembly with identical elements under safe conditions.

### BACKGROUND OF THE INVENTION

Battery elements comprising a plurality of battery cells arranged in a line have already been disclosed which comprise power-conducting tracks that connect the cells in series and/or in parallel, measuring means for measuring the individual voltages of the cells, said measuring means comprising processors, and voltage sensing tap tracks between the terminals of each cell.

These elements are mounted by arranging them in a row and establishing the successive connections between the poles of adjacent batteries, such that the individual voltages of the cells are added up. This type of junctions are created by means of electrically conductive boards that are screwed onto the battery terminals. The process is simple: the connection board is screwed onto one terminal, and then to the other. However, this simple operation is not without risk, since, when screwing one of the sides, the board may pivot, and make an undesired contact with some other board. Moreover, the operators establishing the connections must take pertinent measures to protect themselves against short-circuits, since, as the connectors are added, the potential increases, and voltages of up to several hundreds of volts may be reached, which are therefore lethal. From a regulatory standpoint, this entails restrictions or requirements at the plant, in addition to specialised operators licensed to work with high voltages. Furthermore, they may be dangerous from a chemical standpoint, especially due to the potential combustion of exhaust gases.

On the other hand, state signal connections must be established between the individual cells; the ultimate purpose of these signals is to determine the state of charge of each cell, guarantee safe operating conditions and allow for active or passive balancing of the cells, in order to optimise the operation thereof. Consequently, this involves more connections, and their high number may make the connection process unfeasible when too many cells are connected.

Moreover, it is necessary to find a safe space for the power connectors, the voltage signal connectors, the temperature sensor connectors and the control components, such as the processors.

It is also desirable that different elements may be connected to one another, also in series and/or in parallel, and that this operation may be performed in a reliable, safe manner, without being dependent upon additional welds.

### DESCRIPTION OF THE INVENTION

In order to fulfil the aforementioned needs, the present invention proposes a battery element comprising a plurality of battery cells arranged in a line, which comprises power-conducting tracks that connect the cells in series and/or in parallel, means of measuring the individual voltages of the cells, said measuring means comprising processors, and voltage sensing tap tracks between the terminals of each cell, characterised in that it comprises a printed circuit board or a set of printed circuit boards which are joined to one another and at least one of which is provided with openings for the passage and connection of the terminals of the cells, the power-conducting tracks, the voltage sensing tap tracks and the processors being integrated into the printed circuit boards, said printed circuit board(s) comprising, on one edge thereof, a general output connection terminal of the element, which supplies the aggregate voltage of the cells of the element and the voltage state signals of each of the cells.

Therefore, the risks involved in the connection process are minimized, since all the power connectors have been previously integrated into the printed circuit boards, which prevents the aforementioned rotation of the boards.

Moreover, the organization of the connections have also been previously made on the printed circuit boards, such that the connection process has been moved to a prior step wherein there are still no voltage generator elements. The power connection is established only once the printed circuit boards have been manufactured; consequently, everything is simpler and safer. It must be borne in mind that each cell involves two power connections, two signal connections and two temperature sensor connections.

Furthermore, the presence of a general connection in each element allows for their integration with other elements by way of a matrix, using a general printed circuit board for the quick, reliable connection of each battery element.

According to a first variant, the cells are prismatic, with the terminals placed on the same side, and it comprises a single printed circuit board, wherein the connections between the terminals and the tracks are made by welding.

According to a second, especially preferred variant, the cells are cylindrical, with the terminals arranged on opposite sides and adjacent cells placed in the reverse direction, and it comprises three printed circuit boards, two of them provided with openings for the passage and connection of the terminals of the cells, placed facing said terminals, and the third placed on one side of the cells, and mechanically and electrically connected to the other two.

In this case, preferably:
- the processors are arranged on the third board, on the side thereof facing the cells of the element, and in the areas of the third board facing the free volume that is configured between the cells and the third board;
- the power-conducting tracks are arranged on the two boards facing said terminals and on the third board;
- the voltage sensing tap tracks are distributed between the two boards facing said terminals and the third board.

Advantageously, the mechanical junction between the boards comprises openings on the third board, and complementary flanges at the joint edge of the other two boards.

More advantageously, the connection of the voltage sensing tap tracks at the level of the junction between the boards is made by welding.

In the case of cylindrical cells, the terminals of the cells and the power-conducting tracks are connected by means of screws, and the general connection terminal is arranged on one edge of the third board, more preferably at the centre of the edge.

In both variants, temperature sensors placed jointly with the processors are envisaged.

The invention also relates to a battery comprising a plurality of elements according to any of the two variants described, which comprises a casing provided with contiguous receptacles for each of the elements, each receptacle being equipped, at the bottom thereof, with a connection terminal for each of the general connection terminals of the elements. To this end, a connection board equipped with a connection for each of the battery elements is envisaged.

### BRIEF DESCRIPTION OF THE FIGURES

For a better understanding of the invention described above, a set of drawings is attached which, schematically and by way of a non-limiting example only, represent a practical case of embodiment.
Figure 1 is a perspective view of a battery according to the invention.
Figure 2 is like Figure 1, but seen from behind, although the general connection board between the elements has been omitted.
Figure 3 is a perspective view of an element according to the invention.
Figure 4 is a top view of an element according to the invention.
Figure 5 is analogous to Figure 4, but in this case the arrangement of the control means, i.e. the processors, may be observed.
Figure 6 is a detail perspective view of the connection between the elements and the general connection board.

### DESCRIPTION OF A PREFERRED EMBODIMENT

As may be observed in the figures, the invention relates to a battery element 1 comprising a plurality of battery cells 2 arranged in a line, which comprises power-conducting tracks 3 that connect the cells 2 in series and/or in parallel, measuring means for measuring the individual voltages of the cells 2, said measuring means comprising processors P, and voltage sensing tap tracks 4 between the terminals of each cell 2.

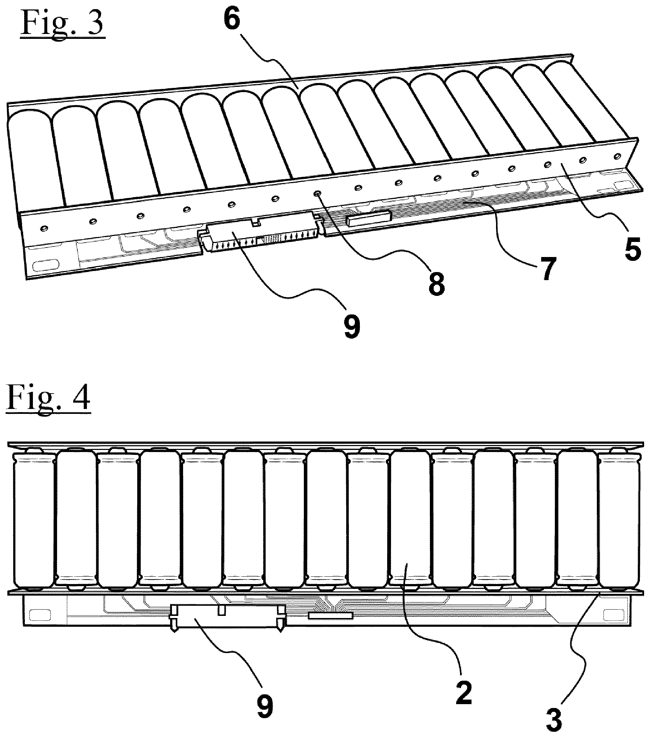

These characteristics being already known, as may be seen, for example, in Figure 3, the element comprises a printed circuit board 5 or a set of printed circuit boards 5, 6, 7 joined to one another and at least one of which is provided with openings 8 for the passage and connection of the terminals of the cells 2, the power-conducting tracks 3, the voltage sensing tap tracks 4 and the processors P being integrated into the printed circuit boards, and the printed circuit board(s) 5, 6, 7 comprising, on one edge thereof, a general output connection terminal 9 of the element, which supplies the aggregate voltage of the cells 2 of the element 1 and the voltage state signals of each of the cells 2.

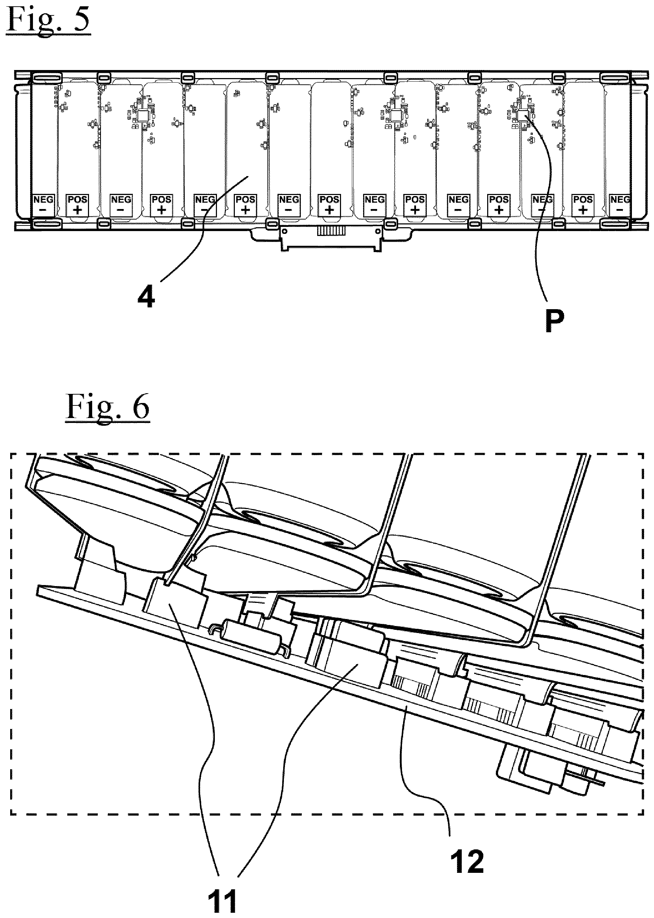

As may be seen in Figure 5, the cells 2 are cylindrical, with the terminals placed on opposite sides and adjacent cells placed in the reverse direction.

As may be observed in Figure 3, the element comprises three printed circuit boards 5, 6, 7, two of them, 5, 6, provided with openings for the passage and connection of the terminals of the cells 2, and arranged facing said terminals, and the third, 7, arranged on one side of the cells 2 and mechanically and electrically connected to the other two, 5, 6.

In Figure 5, it may also be observed that the processors P are arranged on the third board 7, on the side facing the cells 2 of the element 1, and in the areas of the third board 7 facing the free volume that is configured between the cells 2 and the third board 7. For example, in this figure, wherein the cells have been made transparent, it may be observed that the processors are arranged at the level of contact site between adjacent cells, which is where there is space to house them.

As may be observed in this figure, it is not necessary for each cell to have a processor; instead, these functions can be grouped together, such that one chip controls a group of cells. In this latter case, a digital communication bus is envisaged to send the voltage and temperature signals to the corresponding processor.

The power-conducting tracks 3 are arranged on the two boards 5, 6 facing said terminals and on the third board 7.

The voltage sensing tap tracks 4 are distributed between the two boards 5, 6 facing said terminals and the third board 7.

The mechanical junction between the boards comprises openings on the third board 7, and complementary flanges at the joint edge of the other two boards 5, 6.

As may be observed in Figure 5, the general connection terminal 9 is arranged on one edge of the third board 7, preferably at the centre of the edge.

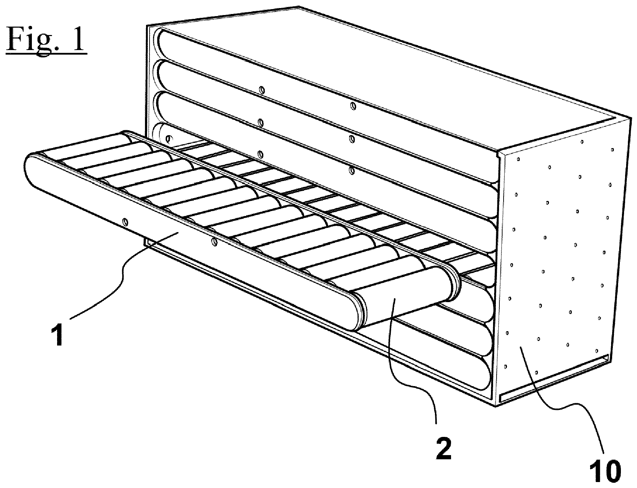

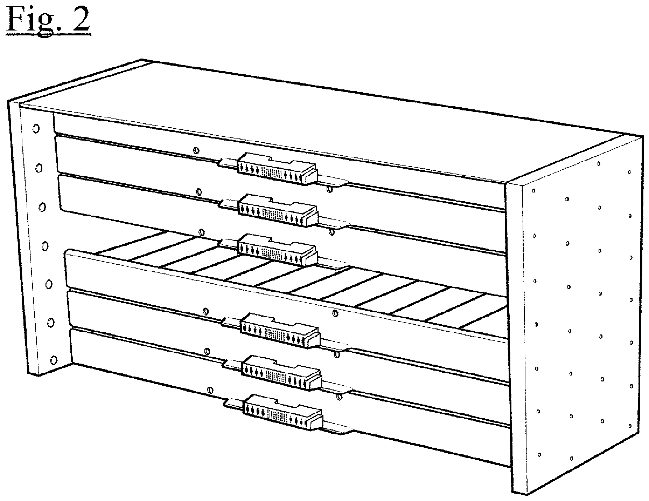

As may be observed in Figures 1, 2 and 6, the invention also relates to a battery comprising a plurality of elements according to the invention, which comprises a casing 10, provided with contiguous receptacles for each of the elements, each receptacle being equipped, at the bottom thereof, with a connection terminal 11 for each of the general connection terminals 9 of the elements 1.

Finally, as may be observed in Figure 6, a connection board 12 is envisaged, which is provided with a connection 11 for each of the battery elements 1.

Although we have referred to a specific embodiment of the invention, it is evident, for persons skilled in the art, that the battery element described is susceptible to numerous variations and modifications, and that all the details mentioned above may be replaced with other technically equivalent ones, without going beyond the scope of protection defined by the attached claims.

## Claims

1. Battery element (1) comprising a plurality of battery cells (2) arranged in a line, which comprises power-conducting tracks (3) that connect the cells (2) in series and/or in parallel, measuring means for measuring the individual voltages of the cells (2), said measuring means comprising processors (P) and voltage sensing tap tracks (4) between the terminals of each cell (2), **characterised in that** it comprises a printed circuit board (5) or a set of printed circuit boards (5, 6, 7) joined to one another and at least one of which is provided with openings (8) for the passage and connection of the terminals of the cells (2), the power-conducting tracks (3), the voltage sensing tap tracks (4) and the processors (P) being integrated into the printed circuit boards, the printed circuit board(s) (5, 6, 7), comprising, on one edge thereof, a general output connection terminal (9) of the element, which supplies the aggregate voltage of the cells (2) of the element (1) and the voltage state signals of each of the cells (2).

2. Element according to claim 1, wherein the cells (2) are prismatic, with the terminals placed on the same side, comprising a single printed circuit board (5), and wherein the connections between the terminals and the tracks are made by welding.

3. Element according to claim 1, wherein the cells (2) are cylindrical, with the terminals placed on opposite sides and adjacent cells placed in the reverse direction, comprising three printed circuit boards (5, 6, 7), two of which, (5, 6), are provided with openings for the passage and connection of the terminals of the cells (2), and are placed facing said terminals, and the third (7) is placed on one side of the cells (2), and is mechanically and electrically connected to the other two, (5, 6).

4. Element according to claim 4, wherein:
- the processors (P) are arranged on the third board (7), on the side facing the cells (2) of the element (1), and in the areas of the latter facing the free volume that is configured between the cells (2) and the third board (7);
- the power-conducting tracks (3) are arranged on the two boards (5, 6) facing said terminals and on the third board (7);
- the voltage sensing tap tracks (4) are distributed between the two boards (5, 6) facing said terminals and the third board (7).

5. Element according to claim 4, wherein the mechanical junction between the boards comprises openings on the third board (7), and complementary flanges at the joint edge of the other two boards (5, 6).

6. Element according to the preceding claim, wherein the connection of the voltage sensing tap tracks (4) at the level of the junction between the boards is made by welding.

7. Element according to any of claims 3 to 6, wherein the terminals of the cells and the power-conducting tracks (3) are connected by means of screws.

8. Element according to any of claims 3 to 7, wherein the general connection terminal (9) is arranged on one edge of the third board (7).

9. Element according to claim 8, wherein the connection is placed at the centre of the edge.

10. Element according to any of the preceding claims, comprising temperature sensors arranged jointly with the processors.

11. Battery comprising a plurality of elements according to any of claims 1 to 10, comprising a casing (10) provided with contiguous receptacles for each of the elements, each receptacle being equipped, at the bottom thereof, with a connection terminal (11) for each of the general connection terminals (9) of the elements (1).

12. Battery according to claim 11, comprising a connection board (12) equipped with a connection (11) for each of the battery elements (1).
